# EUROPEAN PATENT APPLICATION

(11) **EP 0 734 161 A2**
(43) Date of publication of application: **25.09.1996**
(21) Application number: 96301914.6
(22) Date of filing: 20.03.1996
(51) Int. Cl.: H04N 7/00

(54) **Digital signal processing method and apparatus**

(30) Priority: 22.03.1995 JP 61450/95
(71) Applicant: SONY CORPORATION, Tokyo 141 (JP)
(72) Inventor: Kitazato, Naohisa, Shinagawa-ku, Tokyo (JP)
(74) Representative: Nicholls, Michael John

(57) **Abstract**

A digital signal processing apparatus where a digital signal is processed via a plurality of series-connected signal processing circuits (5, 7) each having a delay time, and the circuits (5, 7) are enabled to change the content of control in accordance with a control signal having a control time code. The apparatus comprises controllers (5b, 7b) for controlling the signal processing circuits (5, 7); memories (5a, 7a) where reading and writing are controlled by the controllers (5b, 7b); and a delay circuit (8) having a delay time equal to that in the former of the signal processing circuits (5, 7). When the control signal is supplied to one of the signal processing circuits, first the control signal is previously supplied to and stored in the storage (5a) anterior to the control time. A time code obtained from an external device is supplied to the controller (5b). And upon coincidence of the control time code with the time code obtained from the external device, the controller (5b) reads out the control signal from the storage (5a) and then supplies the control signal via the delay circuit (8) to the one signal processing circuit (7), thereby enabling one circuit (7) to execute a predetermined process based on the control signal.

## Description

The present invention relates to a digital signal processing method and apparatus including a delay element in a digital signal processing stage, and also to a picture compression method and apparatus including such a delay element.

Generally in a signal processing apparatus having a plurality of processing steps, an external computer or an internal controller, which is equipped with a means capable of communicating thereto, outputs a control signal to each signal processing step to thereby control the same.

Meanwhile in television utilizing a broadcasting satellite or a communication satellite, it is expected to realize in near future a technique of transmitting a television broadcast in digital form. According to this system, digitized television signals can be widely compressed into reduced data in a picture compression apparatus, and control of such an apparatus is achievable by the constitution mentioned.

However, in the above picture compression apparatus, there exists a delay time of several frames from input to output, and the control signal applied to each signal processing step is required to retain a high temporal accuracy relative to the frame precision with such delay time taken into consideration. Therefore, in the constitution mentioned, the control signals function at the same timing to the respective signal processing steps, hence causing a failure in attaining precise control in synchronism with the digital signals.

More specifically, suppose now that the picture compression apparatus incorporates a resolution converter and a picture encoder which is positioned in the succeeding stage and is subject to the action of the resolution converter, and a delay time of several frames exists therebetween. When a control signal is outputted for changing the resolution at a certain time point, it follows that the control signal acts on both the resolution converter and the picture encoder at the same timing. Then it becomes impossible to attain proper synchronism between the resolution converter and the picture encoder, i.e., between the control signal and the resolution change point of the digital signal in the picture encoder, whereby exact reproduction of the television signal is rendered impossible in the decoder.

The problems described above are raised in every digital signal processing that includes a delay element in the digital signal processing steps.

It is therefore an object of the present invention to provide improvements in a digital signal processing method and so forth which are capable of realizing superior control with enhanced temporal precision in each of the signal processing steps.

For the purpose of achieving the above object, the present invention accomplishes an improved constitution in a digital signal processing method and so forth where a digital signal is introduced to a signal processing circuit via a processing stage having a delay element, and the signal processing circuit changes the content of control in accordance with a control signal. In the improved method and so forth, the control signal is supplied to the signal processing circuit while being delayed correspondingly to the delay time of the delay element.

Thus, the digital signal is inputted to the signal processing circuit via the processing stage having a delay element, while the control signal is also applied to the signal processing circuit with a delay corresponding to the delay time of the delay element, so that synchronism can be attained between the digital signal and the control signal in the signal processing circuit.

For the same purpose, the present invention accomplishes another improved constitution with regard to a digital signal processing method and so forth where a digital signal is introduced to a signal processing circuit via a processing stage having a delay element, and the signal processing circuit changes the content of control in accordance with a control signal. This improvement is so contrived as to be capable of first adding a control time code to the control signal, then sending the control signal with the control time code previously to and storing the same in a storage means anterior to the control time, subsequently supplying the control signal to a control means in the signal processing circuit while delaying the time code correspondingly to the delay time of the delay element, and enabling the control means to execute a predetermined process in accordance with the control signal upon coincidence of the time code with the control time code of the control signal in the storage means.

Thus, the digital signal is inputted to the signal processing circuit via the processing stage having a delay element, while the time code is also inputted to the signal processing circuit with a delay corresponding to the delay time of the delay element, and the control signal is applied to the signal processing circuit on the basis of the delayed time code, whereby synchronism can be attained between the digital signal and the control signal in the signal processing circuit.

The above and other features and advantages of the present invention will become apparent from the following description which will be given with reference to the illustrative accompanying drawings.
Fig. 1A is a circuit block diagram of a digital signal processing apparatus (first embodiment);
Fig. 1B is a circuit block diagram of another digital signal processing apparatus (second embodiment);
Fig. 2 is a time chart (first embodiment);
Fig. 3 shows a control schedule (second embodiment);
Fig. 4 shows picture types and a predictive structure (third embodiment);
Fig. 5 is a circuit block diagram of a picture compression apparatus (third embodiment);
Fig. 6 is a circuit block diagram of a resolution converter (third embodiment);
Figs. 7A to 7D show picture compositions in the resolution converter (third embodiment);
Fig. 8 is a circuit block diagram of a frame order converter (third embodiment);
Fig. 9 illustrates conversion of a frame order (third embodiment);
Fig. 10 is a circuit block diagram of a picture encoder (third embodiment);
Fig. 11 shows a composition of real-time control data (third embodiment); and
Fig. 12 is a time chart (third embodiment).

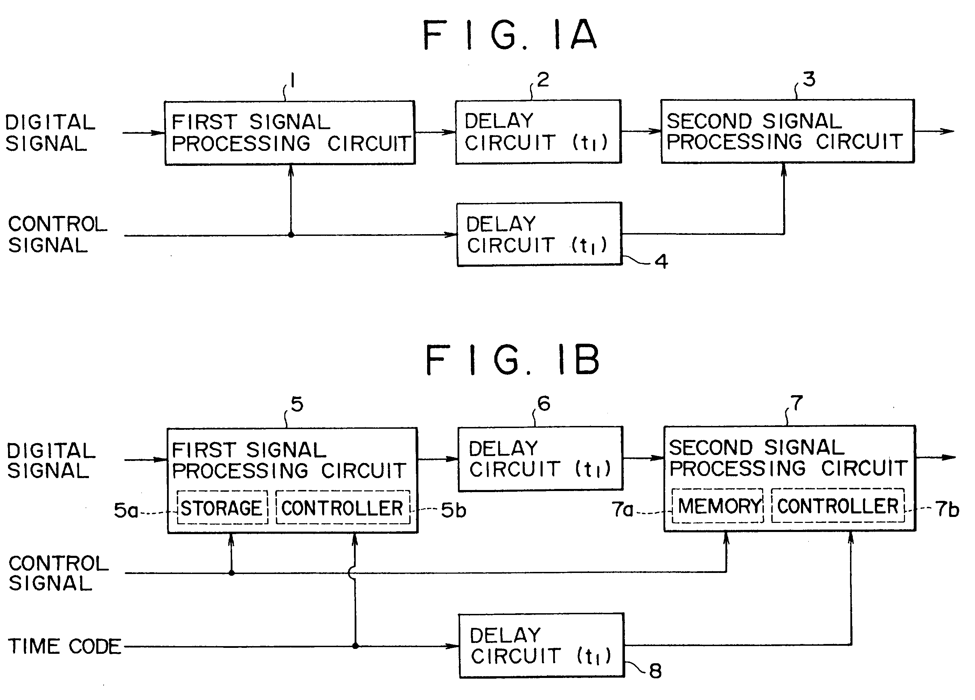

Hereinafter some preferred embodiments of the present invention will be described with reference to the accompanying drawings. Fig. 1A shows a circuit block diagram of a digital signal processing apparatus representing a first embodiment of the present invention. In Fig. 1A, a digital signal is supplied to a first signal processing circuit 1, which subsequently executes a predetermined process (a₁ or b₁) in accordance with a control signal and then outputs the processed digital signal. The output of the first signal processing circuit 1 is supplied to a second signal processing circuit 3 via a delay circuit 2 which serves as an equivalent circuit. The second signal processing circuit 3 executes a predetermined process (a₂ or b₂) in accordance with the control signal. The process a₂ is executed on the digital signal after the process a₁, and the process b₂ is executed on the digital signal after the process b₁.

The control signal obtained from a control means (not shown) is supplied directly to the first signal processing circuit 1 while being supplied via a delay circuit 4 to the second signal processing circuit 3. The delay amount of the delay circuit 4 is set to be equal to a delay time (t₁) of the delay circuit 2 in the signal line.

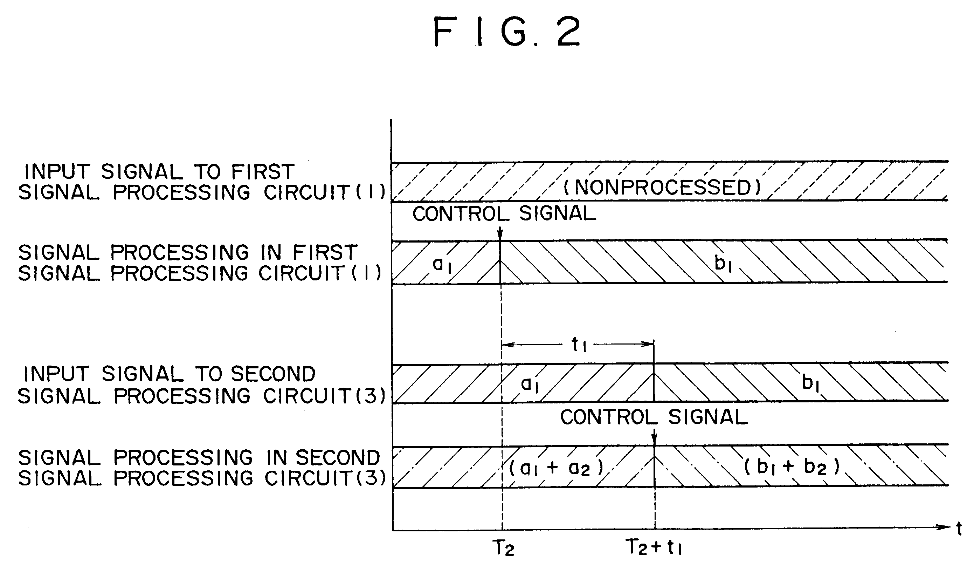

In the above configuration, the process a₁ is executed in the first signal processing circuit 1 prior to a time point T₂, as shown in Fig. 2, and the digital signal after the process a₁ is supplied to the second signal processing circuit 3 where the process a₂ is executed. When a control signal is outputted at the time point T₂ to change the content of process to B, the control signal is supplied without any delay to the first signal processing circuit 1 but is supplied with the delay (t₁) to the second signal processing circuit 3. Therefore, the content of process in the first signal processing circuit 1 is changed immediately to the process b₁, whereas in the second signal processing circuit 3, the content is changed to the process b₂ with the delay t₁. However, since the digital signal after the process b₁ executed in the first signal processing circuit 1 is inputted also to the second signal processing circuit 3 with the delay t₁, synchronism can be attained between the control signal and the process change point of the digital signal in the second signal processing circuit 3. In other words, the digital signal after the process a₁ executed in the first signal processing circuit 1 undergoes the process a₂ in the second signal processing circuit 3, and the signal after the process b₁ executed in the first signal processing circuit 1 undergoes the process b₂ in the second signal processing circuit 3.

Fig. 1B shows a circuit block diagram of a digital signal processing apparatus representing a second embodiment of the present invention. In Fig. 1B, a digital signal is supplied to a first signal processing circuit 5, which subsequently executes a predetermined process (a₁ or b₁) in accordance with a control signal and then outputs the processed digital signal. The output of the first signal processing circuit 5 is supplied to a second signal processing circuit 7 via a delay circuit 6 which serves as an equivalent circuit. The second signal processing circuit 7 executes a predetermined process (a₂ or b₂) in accordance with the control signal and then outputs the processed digital signal.

In the first signal processing circuit 5 and the second signal processing circuit 7, there are incorporated memories 5a, 7a and controllers 5b, 7b, respectively. The controllers 5b, 7b control reading and writing for the memories 5a, 7a respectively, and further control the signal processing lines of the circuits 5 and 7.

Meanwhile a control time code is added to a control signal outputted from an external control means (not shown), and this control signal is supplied directly to the first and second signal processing circuits 5 and 7. A time code from an external timer (not shown) is supplied directly to the first signal processing circuit 5 while being supplied via a delay circuit 8 to the second signal processing circuit 7. The delay amount of this delay circuit 8 is set to be equal to a delay time (t₁) of the delay circuit 6 in the signal line.

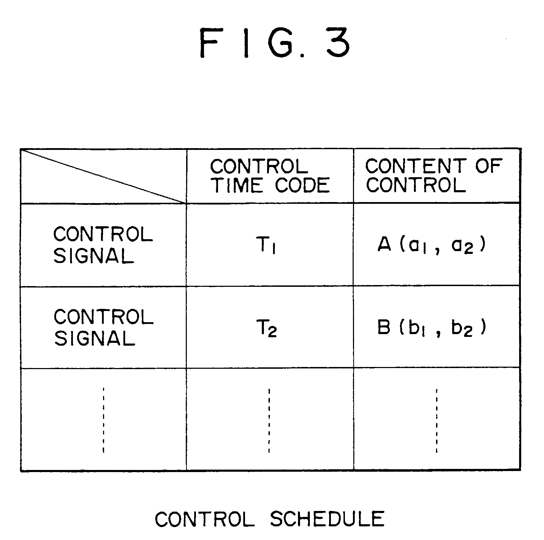

In the above configuration, the external control means outputs control schedule data (control list) which is a set of control signals as shown in Fig. 3, and the entire control signals are stored in the memories 5a, 7a of the first and second signal processing circuits 5, 7. During a time period from T₁ to T₂, the process a₁ is executed in the first signal processing circuit 5 under control of the controller 5b, while the process a2 is executed in the second signal processing circuit 7 under control of the controller 7b. The controller 5b or 7b of the first or second signal processing circuit 5, 7 checks if each of the time codes inputted successively coincides with the control time (T₂) of the memory 5a or 7a. And upon coincidence of each time code with the control time (T₂), the controller 5b in the first signal processing circuit 5 performs its control action to execute the process b₁, while the controller 7b in the second signal processing circuit 7 performs its control action to execute the process b₂.

In this operation, the time code is supplied without any delay to the first signal processing circuit 5 but is supplied with the delay (t₁) to the second signal processing circuit 7. Therefore, the content of process in the first signal processing circuit 5 is changed immediately at T₂, whereas in the second signal processing circuit 7, the content is changed with the delay t₁. Accordingly, as in the first embodiment mentioned, synchronism can be attained between the control signal and the process change point of the digital signal in the second signal processing circuit 7.

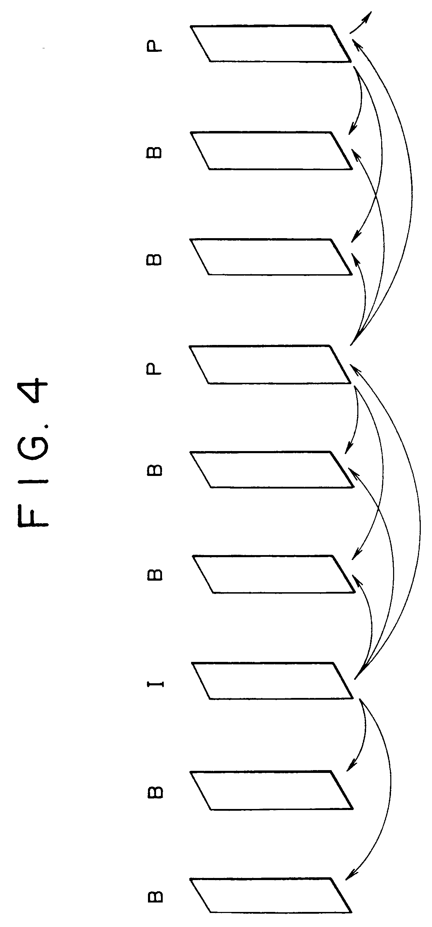

Figs. 4 to 12 show a third embodiment of the present invention representing an exemplary case where the invention is applied to a picture compression apparatus in a digital telecast transmission system. In the digital telecast transmission system where digitized video signals are transmitted in compressed form, data compression is effected on the premise of utilizing the inter-frame correlation by a technique of coding the data through combination of DCT (discrete cosine transform) and motion compensative prediction, and further by a technique of variable-length coding (VLC). Hereinafter this system will be described in detail.

Fig. 4 illustrates picture types of frames and the correlation of prediction thereof. In Fig. 4, identification data called a picture type is given to each frame with regard to the feature of the correlation. There are three picture types of I-picture (intra-picture), P-picture (predictive-picture) and B-picture (bidirectionally predictive-picture). As for an I-picture, DOT is performed by the use of merely a picture signal in the same frame alone without prediction from any other frame. This is termed intra-frame coding. A P-picture is a frame predictable from an immediately preceding I-picture or P-picture (termed forward prediction). And a B-picture is predictable from both of immediately preceding and following I-pictures and P-pictures. It is therefore possible to perform prediction from both of the anterior and posterior frames (termed bidirectional prediction) including forward prediction and backward prediction based on the succeeding frame.

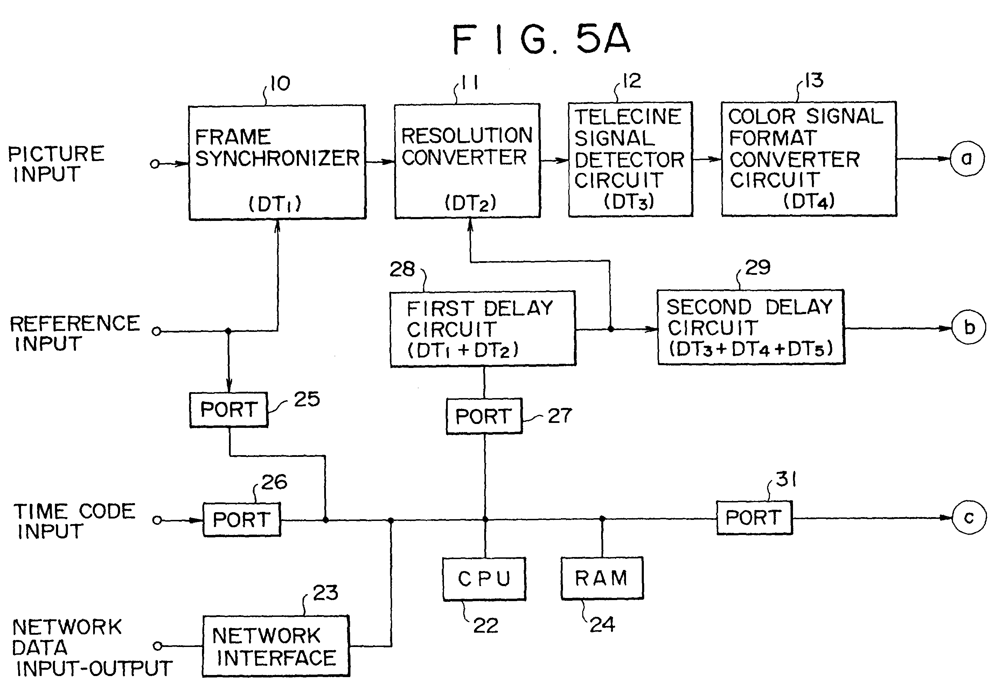

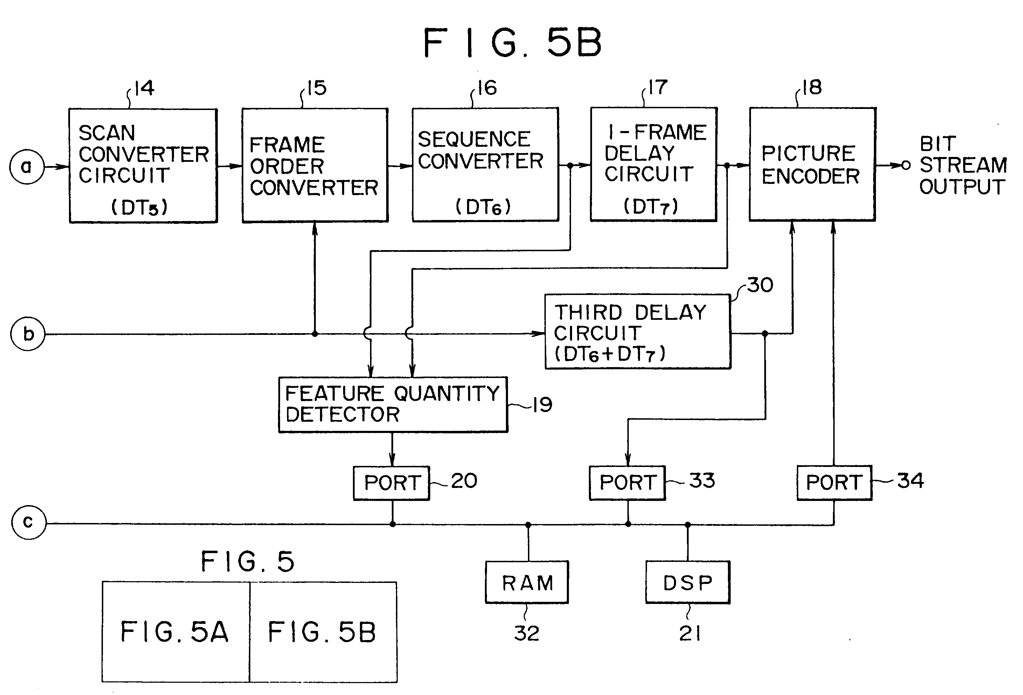

Fig. 5 is a circuit block diagram of a picture compression apparatus. Referring to Fig. 5, an explanation will be given first on a picture signal processing line which is to be controlled. A digitized picture signal is supplied to a frame synchronizer 10, to which a frame synchronizing signal is also supplied. The frame synchronizer 10 outputs the picture signal in synchronism with the frame synchronizing signal, wherein the delay time is set to DT₁, which is approximately equal to two frames, with reference to the frame synchronizing signal.

The output picture signal of the frame synchronizer 10 is supplied to a resolution converter 11, which then varies the horizontal number of pixels of the picture signal on the basis of resolution conversion data and outputs the varied signal. The resolution conversion is executed to enhance the encoding efficiency with sacrifice of the resolution principally in the picture encoding process at a high compression rate.

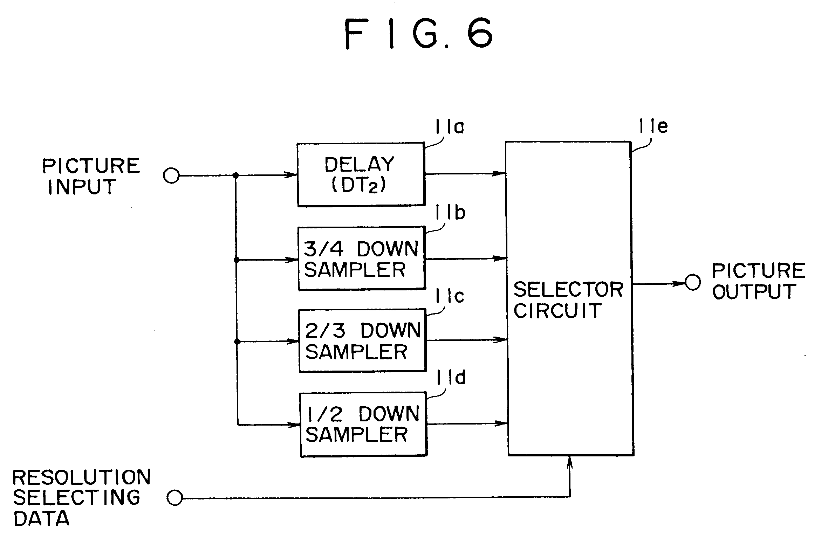

Fig. 6 is a circuit block diagram of the resolution converter 11. In Fig. 6, a picture signal is supplied to a delay circuit 11a, a 3/4 down sampler 11b, a 2/3 down sampler 11c and a 1/2 down sampler 11d, respectively. Each of the down samplers 11b - 11d consists of a sampling conversion circuit and a low-pass filter, and the individual sampling conversion circuits perform resampling in such a manner as to change the horizontal number of pixels to rates of 3/4, 2/3 and 1/2, respectively. In this down sampling, the delay time is set to DT₂ which corresponds to several samples. In the aforementioned delay circuit 11a, the delay time in the process without any conversion of the resolution is set to be equal to the delay time DT₂ in each of the down samplers 11b - 11d.

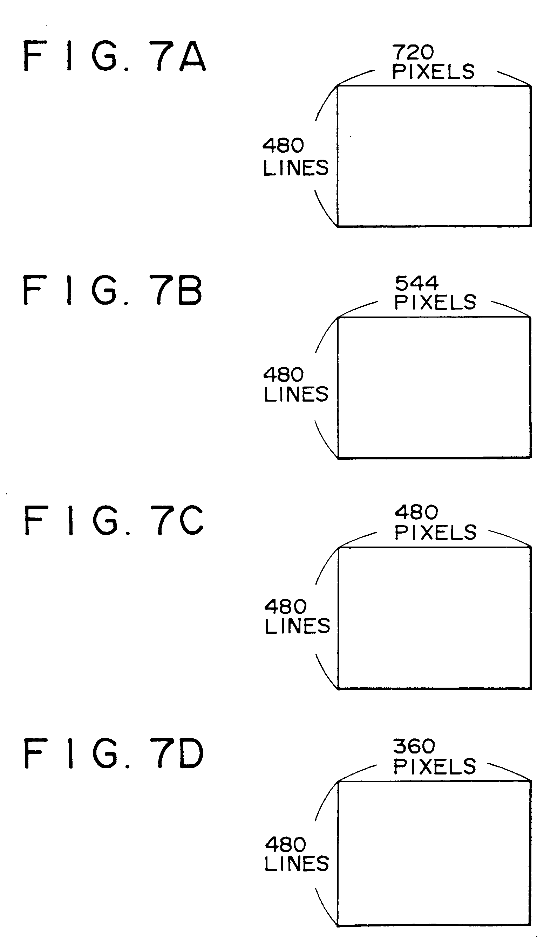

The output of the delay circuit lla is the same as the input picture signal, and it has 720 pixels in the horizontal direction as shown in Fig. 7A. The output of the 3/4 down sampler 11b has 544 (3/4 of 720) pixels in the horizontal direction as shown in Fig. 7B. The output of the 2/3 down sampler 11b has 480 (2/3 of 720) pixels in the horizontal direction as shown in Fig. 7C. And the output of the 1/2 down sampler 11d has 360 (1/2 of 720) pixels in the horizontal direction as shown in Fig. 7D.

The output of the delay circuit lla and the outputs of the down samplers 11b - 11d are supplied to a selector circuit lle, which selects one of the picture signals in accordance with the resolution selection data and then outputs the selected signal.

Referring back to Fig. 5 again, the output picture signal of the resolution converter 11 is supplied to a telecine signal detector circuit 12, which detects if the picture signal is a telecine signal or not and, in the case of a telecine signal, returns it to the former state thereof. In this telecine signal detector circuit 12, the delay time is set to DT₃ which corresponds to several frames or so.

The output picture signal of the telecine signal detector circuit 12 is supplied to a color signal format converter circuit 13, which converts the format of the color signals (Y, R-Y, B-Y) from 4:2:2 to 4:2:0 and then outputs the format-converted signal. The delay time in this color signal format converter circuit 13 is set to DT₄ which corresponds to several lines or so.

The output picture signal of the color signal format converter circuit 13 is supplied to a scan converter circuit 14, which converts a scan mode from raster scan to block scan for executing an undermentioned DOT process. The delay time in this scan converter circuit 14 is set to DT₅ which corresponds to 16 lines or so.

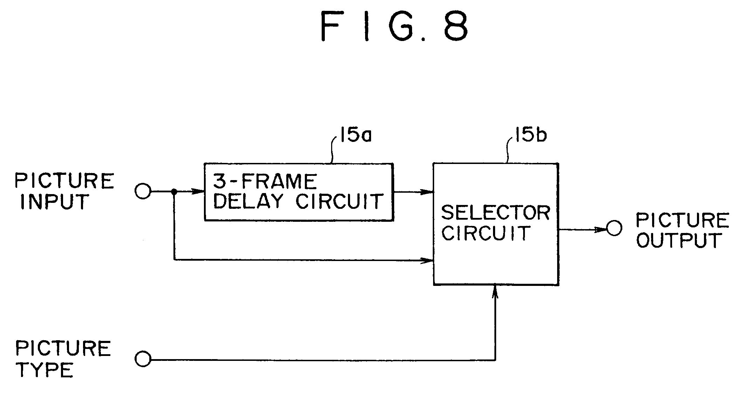

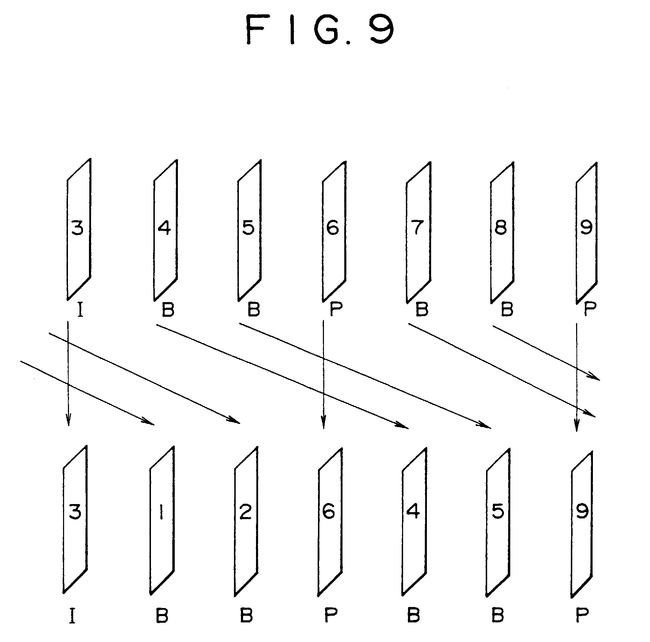

The output picture signal of the scan converter circuit 14 is supplied to a frame order converter 15, which delays only B-pictures to enable prediction thereof since each B-picture is predicted from a future frame. Fig. 8 shows a concrete circuit block diagram of the frame order converter 15. In Fig. 8, the picture signal is supplied via a frame delay circuit 15a to a selector circuit 15b while being supplied thereto directly without passage through any other circuit. When the picture type data is a B-picture, the selector circuit 15b selects the output of a 3-frame delay circuit 15a. Meanwhile, when the picture type data is an I-picture or a P-picture, the selector circuit 15b selects the nondelayed picture signal and outputs the same. Consequently, the picture signals in the converted frame order are outputted from the frame order converter 15, as shown in Fig. 9. Any delay of partial frames caused by the frame order converter 15 is not regarded as the delay concerned with the present invention.

Referring back to Fig. 5 again, the output picture signal of the frame order converter 15 is supplied to a sequence converter 16, which performs sequence conversion conforming to an undermentioned picture encoder 18. The delay time in the sequence converter 16 is set to DT₆ which corresponds to 1/2 frame or so. The output picture signal of the sequence converter 16 is supplied via a 1-frame delay circuit 17 to a picture encoder 18. The delay time in the 1-frame delay circuit 17 is set to DT₇.

The input and output signals of the 1-frame delay circuit 17 are supplied to a feature quantity detector circuit 19, which compares the picture signal of the present frame with that of the preceding frame and detects if the result of such a comparison exceeds a predetermined reference value or not. When the above result is in excess of the reference value, a scene change detection signal is outputted via a port 20 to a DSP (digital signal process) circuit 21. In the DSP circuit 21, the scene change detection signal is used as data for calculating the quantization scale.

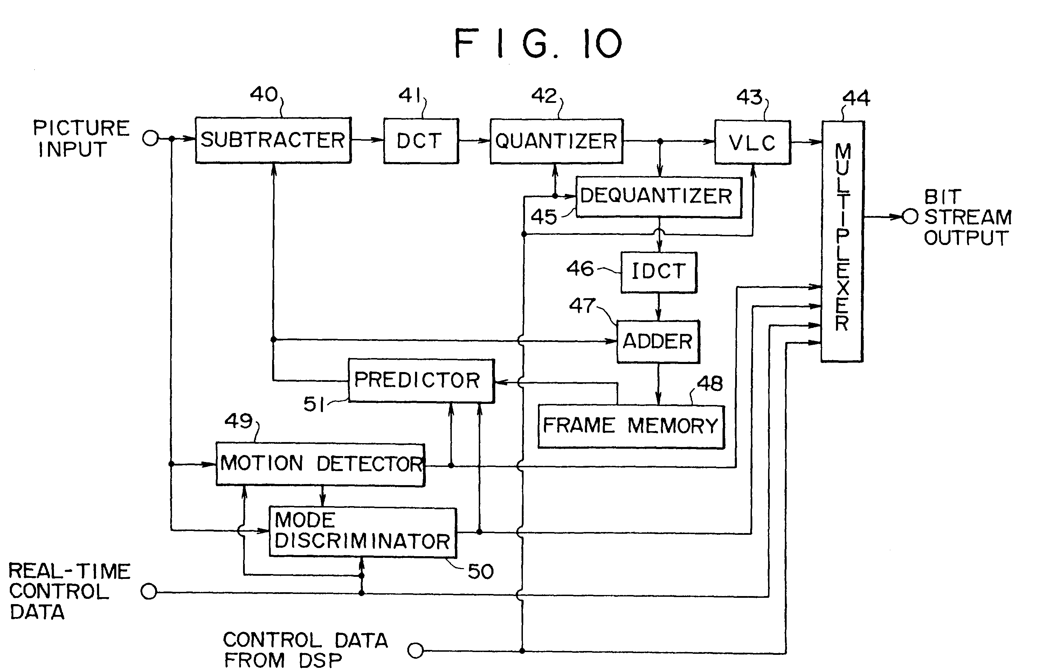

Fig. 10 is a detailed circuit block diagram of the picture encoder 18. In Fig. 10, the input picture signal is supplied to a subtracter 40, which then subtracts the picture signal from an undermentioned predictive value. The output of the subtracter 40 is two-dimensional actual picture data or predictive error data and is supplied to a DCT coding circuit 41. This circuit 41 transforms the above data into DCT coefficients in a frequency region of each unit block (e.g., 8 × 8 pixels). Since pixels are signals composed mostly of low-frequency components, generally some deviation is existent in the distribution of DCT coefficients.

The output of the DCT coding circuit 41 is supplied to a quantizer 42, where such output is quantized in accordance with the control data obtained from the DSP circuit 21. Then the quantized signal is supplied to a variable-length coding circuit 43, which encodes the signal in accordance with the control data from the DSP circuit 21. In this variable-length encoding, a short code is allocated to a high-probability event while a long code is allocated to a low-probability event through utilization of the deviation in the DCT coefficients, whereby superior encoding can be realized finally with high efficiency.

The output of the quantizer 42 is supplied to a dequantizer 45 and an IDCT circuit 46 in this order, and subsequently the output of the IDCT circuit 46 is added to an undermentioned predictive value in an adder 47, so that the coded former picture signal is resumed. The picture signal thus decoded is stored in a frame memory 48.

Meanwhile the input picture signal is supplied also to a motion detector 49 and a mode discriminator 50, and then the motion detector 49 detects the motion of the picture signal of each unit block (e.g., 8 × 8 pixels) in relation to the picture type data (I, P or B) of the real-time control data. Thereafter the motion detector 49 outputs the motion vector of each unit block to a predictor 51 and a multiplexer 44 while outputting to the mode discriminator 50 an estimated value for calculation of the motion vector. The mode discriminator 50 analyzes the picture signal and the estimated value, and then selects a possible prediction mode per block in accordance with the picture type data (I, P or B) of the real-time control data. More specifically, the mode discriminator 50 selects an intra-frame coding mode alone in the case of an I-picture, or selects one of an intra-frame coding mode and a forward prediction mode in the case of a P-picture, or selects one of such two modes, a backward prediction mode and a bidirectional prediction mode in the case of a B-picture, and then outputs the selected prediction mode to both of the predictor 51 and the multiplexer 44. Subsequently the predictor 51 read out the picture signal from the frame memory 48 and generates a predictive value on the basis of the motion vector and the prediction mode. In the intra-frame coding mode, the predictive value is turned to be zero. In this case, therefore, the output of the subtracter 40 becomes actual picture data; whereas in any other case, the output becomes predictive error data.

The multiplexer 44 is supplied with real-time control data and control data in addition to the compressed picture signal, the motion vector and the prediction mode mentioned above, then multiplexes such signals and produces an output bit stream.

Now referring back to Fig. 5 again, an explanation will be given on the control signal processing line below. A CPU (central processing unit) 22 serving as a controller communicates with an external apparatus such as a computer via a network interface 23 and stores a control list, which is a set of control data, in a RAM (random access memory) 24 serving as a storage. The control data construction is a string of data composed of control time code, resolution selecting data, picture type and so forth, wherein the control time code indicates the real time to apply the resolution selecting data, picture type and so forth.

A frame synchronizing pulse as a reference input is supplied via a port 25 to the CPU 22, which accesses the externally inputted time code latched by a port 26 in synchronism with the frame synchronizing pulse. This time code is supplied in the frame period synchronously with the input picture signal.

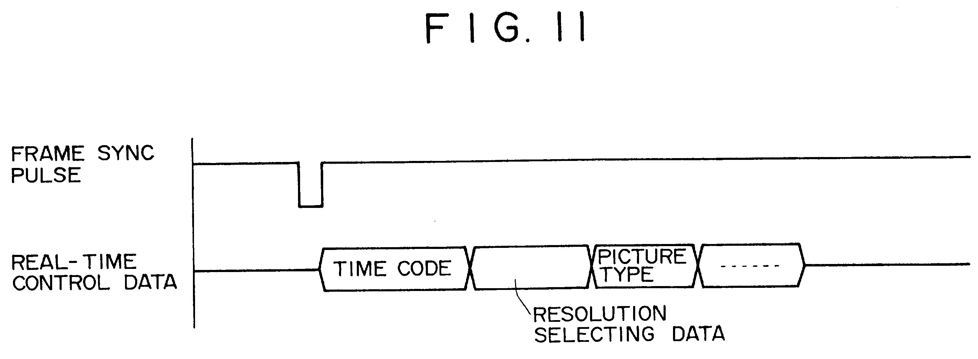

The CPU 22 keeps checking if the externally inputted time code coincides with the control time code of each control data in the RAM 24 and, upon coincidence thereof, outputs the relevant control data from a port 27. This control data is termed real-time control data, whose composition is such as shown in Fig. 11. The real-time control data is supplied via a first delay circuit 28 to the resolution converter 11, via the first delay circuit 28 and a second delay circuit 29 to the frame order converter 15, and via the first delay circuit 28, the second delay circuit 29 and a third delay circuit 30 to the picture encoder 18, respectively. Disregarding the processing time of the CPU 22, the delay time of the first delay circuit 28 is set to a total (DT₁ + DT₂) of the delay time DT₁ of the frame synchronizer 10 and the delay time DT₂ of the resolution converter 11. Practically, it is set to the time obtained by subtracting the processing time of the CPU 22. The delay time of the second delay circuit 29 is set to a total (DT₃ + DT₄ + DT₅) of the delay time DT₃ of the telecine signal detector circuit 12, the delay time DT4 of the color signal format converter circuit 13 and the delay time DT₅ of the scan converter circuit 14. And the delay time of the third delay circuit 30 is set to a total (DT₆ + DT₇) of the delay time DT₆ of the sequence converter 16 and the delay time DT₇ of the 1-frame delay circuit 17.

Meanwhile, the control data (quantizer type, bit rate, etc.) used merely in the picture encoder 18 alone is not outputted as real-time control data, but is outputted from a port 31 to the DSP circuit 21. The DSP circuit 21 is a controller capable of executing its process faster than the CPU, and stores the control data in a RAM (random access memory) 32 which is a storage under supervision of the DSP circuit 21. The time code is supplied to the DSP circuit 21 via a path of a port 27, the first delay circuit 28, the second delay circuit 29, the third delay circuit 30 and a port 33. The DSP circuit 21 keeps checking if this time code coincides with the control time code of each control data in the RAM 32 and, upon coincidence thereof, outputs the relevant control data from a port 34 to the picture encoder 18.

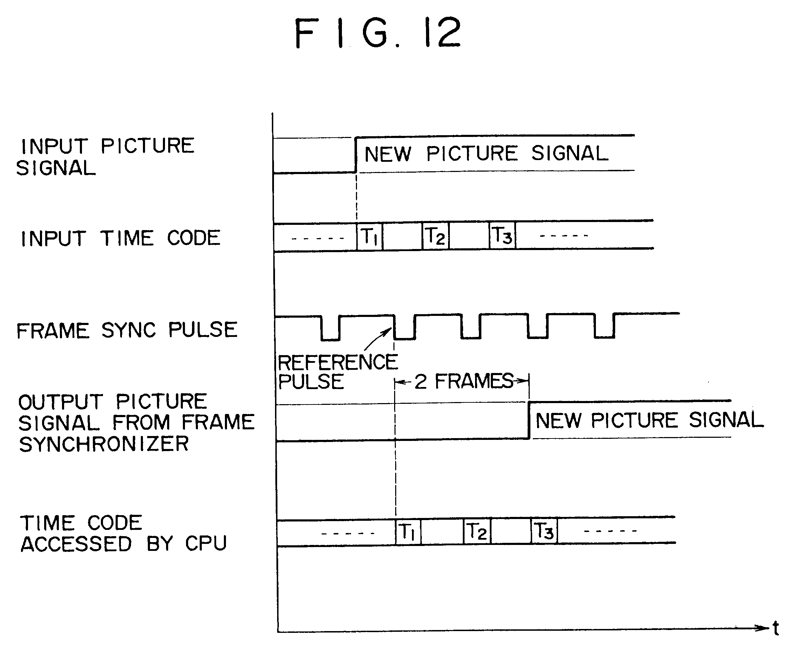

Hereinafter the operation of the above constitution will be described in detail. An explanation will be given below on an exemplary case of switching the picture signal at a real time T₁ and then switching the control content (parameter) in each processing circuit on the basis of such signal switching. Suppose here that control data are stored previously in the RAM 24 and the RAM 32. When a new picture signal is inputted at the time T₁ of the time code, as shown in Fig. 12, the frame synchronizer 10 executes a frame synchronizing process with reference to a frame synchronizing pulse (reference pulse) immediately after T₁, whereby the time code is taken in similarly with reference to the frame synchronizing pulse (reference pulse) immediately thereafter. The picture signal and the time code are thus synchronized with the frame synchronizing pulse through the above process.

The picture signal is outputted from the frame synchronizer 10 in synchronism with a frame synchronizing pulse which is posterior by two to the reference pulse, and then is supplied successively to the resolution converter 11, the telecine signal detector circuit 12 and so forth, whereby a predetermined process is executed in each circuit. Subsequently the picture signal is inputted to the selector circuit lle of the resolution converter 11 after a lapse of the delay time (DT₁ + DT₂) with reference to the reference pulse, and the output signal of the selector circuit 11e is inputted to the frame order converter 15 after a lapse of the delay time (DT₃ + DT₄ + DT₅). Further the output signal of the frame order converter 15 is inputted to the picture encoder 18 after a lapse of the delay time (DT₆ + DT₇).

Meanwhile, upon coincidence of the time code (T₁) with one of the control time codes in the RAM 24, the CPU 22 outputs the relevant control data as real-time control data. Subsequently this real-time control data is supplied via the first delay circuit 28 to the resolution converter 11, via the first and second delay circuits 28, 29 to the frame order converter 15, and via the first, second and third delay circuits 28, 29, 30 to the picture encoder 18, respectively. Next the real-time control data is supplied to the selector circuit 11e of the resolution converter 11 after a lapse of the delay time (DT₁ + DT₂) with reference to the reference pulse, so that the resolution selection data is applied synchronously with a new picture signal. The real-time control data thus supplied to the selector circuit 11e is then supplied to the frame order converter 15 after a lapse of the delay time (DT₃ + DT₄ + DT₅), so that the picture type (I, P or B) is applied synchronously with a new picture signal. Further the real-time control data supplied to the frame order converter 15 is subsequently supplied to the picture encoder 18 after a lapse of the delay time (DT₆ + DT₇), so that the picture type (I, P or B) is applied synchronously with a new picture signal.

Meanwhile the time code is supplied to the DSP circuit 21 via a path of the first, second and third delay circuits 28, 29, 30 and, upon coincidence of the time code (T₁) with one of the control time data in the RAM 32, the DSP circuit 21 outputs the relevant control data to the picture encoder 18. Since the control data is supplied to the picture encoder 18 after a lapse of the delay time (DT₁ + DT₂ + DT₃ + DT₄ + DT₅ + DT₆ + DT₇) with reference to the reference pulse, the control data functions synchronously with the picture signal. Due to the above processing, the control data is caused to act on the picture data in real time with the frame precision, hence preventing occurrence of a failure at the time of switching the parameter.

As described hereinabove, according to one feature of the present invention relative to a digital signal processing method and so forth where a digital signal is introduced to a signal processing circuit via a processing stage having a delay element and then the signal processing circuit changes the content of control in accordance with a control signal, the control signal is supplied to the signal processing circuit while being delayed correspondingly to the delay time of the delay element, so that the control signal functions synchronously with the picture signal to thereby achieve remarkable effect of realizing superior control with high temporal precision.

According to another feature of the present invention relative to a digital signal processing method and so forth where a digital signal is introduced to a signal processing circuit via a processing stage having a delay element and then the signal processing circuit changes the content of control in accordance with a control signal, the improvement is so contrived as to be capable of first adding a control time code to the control signal, then sending the control signal with the control time code previously to and storing the same in a storage means anterior to the control time, subsequently supplying the control signal to a control means in the signal processing circuit while delaying the time code correspondingly to the delay time of the delay element, and enabling the control means to execute a predetermined process by the control signal upon coincidence of the time code with the control time code of the control signal in the storage means, so that the control signal functions synchronously with the picture signal to thereby achieve remarkable effect of realizing superior control with high temporal precision.

Although the present invention has been described hereinabove with reference to some preferred embodiments thereof, it is to be understood that the invention is not limited to such embodiments alone, and a variety of other modifications and variations will be apparent to those skilled in the art.

The scope of the invention, therefore, is to be determined by the appended claims.

## Claims

1. A digital signal processing method which processes a digital signal via a plurality of series-connected signal processing circuits (1, 3) each having a delay time, and enables said signal processing circuits (1, 3) to change the content of control in accordance with a control signal, said method characterized by:
when supplying the control signal to one of said signal processing circuits (1, 3), first delaying the control signal correspondingly to the delay time in the former signal processing circuit(1)which precedes said one signal processing circuit (3), and then supplying the delayed control signal to said one signal processing circuit (3).

2. The digital signal processing method according to claim 1, wherein said plurality of signal processing circuits (1, 3) perform compression of picture data.

3. A digital signal processing method which processes a digital signal via a plurality of series-connected signal processing circuits (5, 7) each having a delay time, and enables said signal processing circuits (5, 7) to change the content of control in accordance with a control signal having a control time code, said method characterized by:
when supplying said control signal with the control time code to one of said signal processing circuits (5, 7), first supplying said control signal to and storing the same in a storage means (7a) anterior to the control time;
subsequently supplying a time code, which is obtained from a timer, to a control means (7b) in said one signal processing circuit (7) after delaying the time code correspondingly to the delay time in the former signal processing circuit (5) which precedes said one signal processing circuit (7); and
upon coincidence of the control time code with the time code from the timer, operating said control means (7b) to control said one signal processing circuit (7) in such a manner as to execute a predetermined process based on the content of said control signal.

4. The digital signal processing method according to claim 3, wherein said plurality of signal processing circuits (5, 7) perform compression of picture data.

5. A digital signal processing apparatus wherein a digital signal is processed via a plurality of series-connected signal processing circuits (1, 3) each having a delay time, and said signal processing circuits (1, 3) are enabled to change the content of control in accordance with a control signal, said apparatus characterized in that:
when the control signal is supplied to one of said signal processing circuits (1, 3), first the control signal is delayed correspondingly to the delay time of a former signal processing circuit (1) which precedes said one signal processing circuit (3), and then the delayed control signal is supplied to said one signal processing circuit (3).

6. The digital signal processing apparatus according to claim 5, wherein said plurality of signal processing circuits (1, 3) perform compression of picture data.

7. A digital signal processing apparatus wherein a digital signal is processed via a plurality of series-connected signal processing circuits (5, 7) each having a delay time, and said signal processing circuits (5, 7) are enabled to change the content of control in accordance with a control signal having a control time code, said apparatus characterized in that:
a control means (7b) for controlling one of said plural signal processing circuits (5, 7) is incorporated in one signal processing circuit (7), and a storage means (7a) is also incorporated in said one signal processing circuit (7) in such a manner that reading and writing are controlled by said control means (7b);
wherein, when the control signal having the control time is supplied to said one signal processing circuit (7), first said control signal is previously supplied to and stored in said storage means (7a) anterior to the control time;
a delay circuit (8) having a delay time is further provided, said delay time being equal to the delay time in the former signal processing circuit (5) which precedes said one signal processing circuit (7);
a time code obtained from a timer is supplied via said delay circuit (8) to said control means (7b);
and upon coincidence of the control time code with the time code obtained from the timer, said control means (7b) is operated to control said one signal processing circuit (7) in such a manner as to execute a predetermined process based on the content of said control signal.

8. The signal processing apparatus according to claim 7, wherein said plurality of signal processing circuits (5, 7) perform compression of picture data.

9. A digital signal processing apparatus wherein a digital signal is processed via a plurality of series-connected signal processing circuits (5, 7) each having a delay time, and said signal processing circuits (5, 7) are enabled to change the content of control in accordance with a control signal having a control time code, said apparatus characterized by the provision of:
control means (5b, 7b) for controlling said plurality of signal processing circuits (5, 7);
storage means (5a, 7a) where reading and writing are controlled by said control means (5b, 7b); and
a delay circuit (8) having a delay time equal to the delay time in the former of said plural signal processing circuits (5, 7);
wherein, when the control signal having the control time is supplied to one of said plural signal processing circuits (5, 7), first said control signal is previously supplied to and stored in said storage means (5a) anterior to the control time;
a time code obtained from an external device is supplied to said control means (5b);
and upon coincidence of the control time code with the time code obtained from the external device, said control means (5b) reads out the control signal from said storage means (5a) and then supplies the control signal via said delay circuit (8) to said one signal processing circuit (7), thereby enabling said one signal processing circuit (7) to execute a predetermined process based on said control signal.

10. The signal processing apparatus according to claim 9, wherein said plurality of signal processing circuits (5, 7) perform compression of picture data.
